# EUROPÄISCHE PATENTSCHRIFT

(11) **EP 1 695 434 B1**
(45) Veröffentlichungstag und Bekanntmachung des Hinweises auf die Patenterteilung: **21.05.2008**
(21) Anmeldenummer: 04820375.6
(22) Anmeldetag: 13.12.2004
(51) Int. Cl.: H02M 7/08, H02M 1/12, H02J 3/01, H02M 7/17

(54) **UMRICHTERSCHALTUNG MIT ZWEI TEILUMRICHTERN**
CONVERTER CIRCUIT WITH TWO PARTIAL CONVERTERS
CIRCUIT CONVERTISSEUR COMPRENANT DEUX CONVERTISSEURS PARTIELS

(30) Priorität: 16.12.2003 EP 03405899
(43) Veröffentlichungstag der Anmeldung: 30.08.2006
(73) Patentinhaber: ABB Schweiz AG, 5400 Baden (CH)
(72) Erfinder: PONNALURI, Srinivas, CH-5417 Untersiggenthal (CH); STEINKE, Jürgen, 79774 Albbruck (DE); STEIMER, Peter, CH-5424 Unterehrendingen (CH)
(74) Vertreter: ABB Patent Attorneys
(86) Internationale Anmeldenummer: PCT/CH2004/000735
(87) Internationale Veröffentlichungsnummer: WO 2005/060081

(56) Entgegenhaltungen:
- EP-A- 0 440 988
- EP-A- 0 584 660
- WO-A-03/084048
- DE-A- 10 134 883
- US-A- 3 546 572
- US-A- 5 005 100
- US-A- 5 852 553
- US-B1- 6 233 996

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

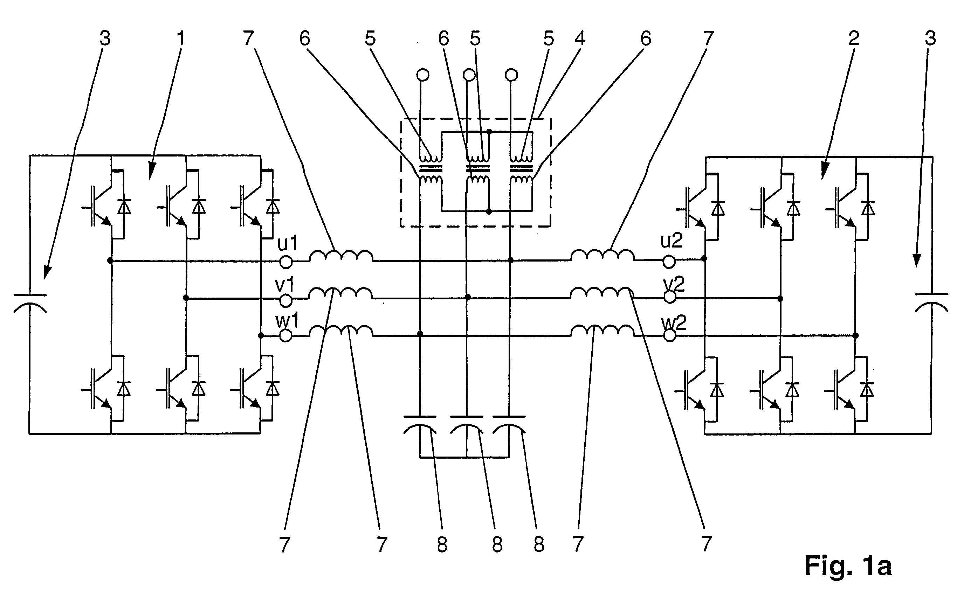

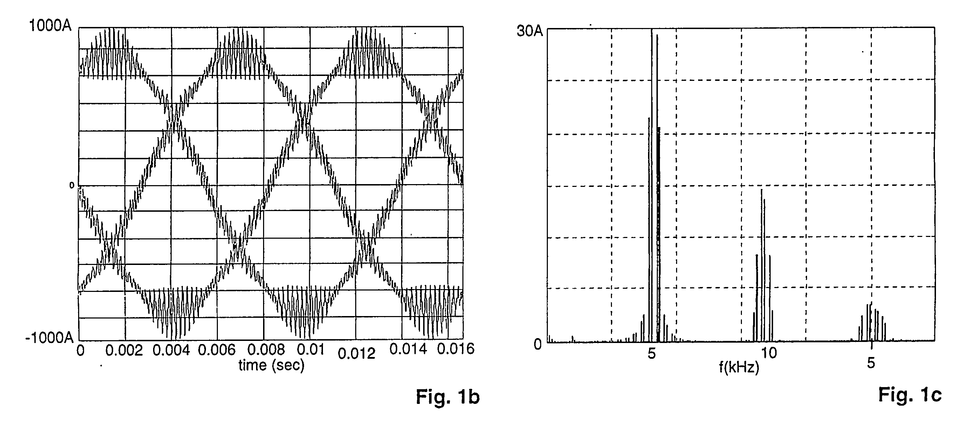

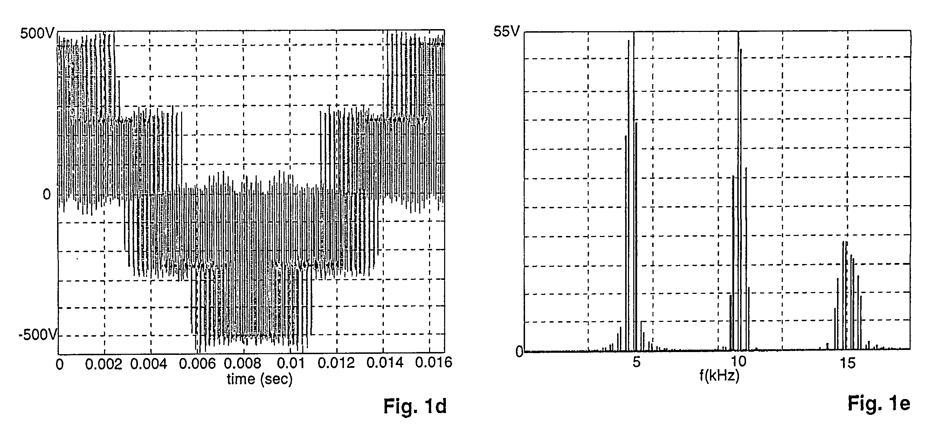

Heute werden in vielen Anwendungen Hochleistungsspannungsumrichterschaltungen eingesetzt. Eine solche Umrichterschaltung umfasst dazu beispielsweise zwei Teilumrichter, wobei jeder Teilumrichter einen Gleichspannungskreis aufweist, der durch einen Kondensator gebildet ist. Weiterhin umfasst jeder Teilumrichter Leistungshalbleiterschalter, die üblicherweise derart verschaltet sind, dass zwei Schaltspannungsniveaus, nämlich die positive Zwischenkreisspannung und die negative Zwischenkreisspannung, an die Teilumrichterphasen des zugehörigen Teilumrichters geschaltet werden können. Jeder Teilumrichter weist üblicherweise drei Teilumrichterphasen auf, wobei jeweils eine Teilumrichterphase des ersten Teilumrichters mit jeweils einer Teilumrichterphase des zweiten Teilumrichters verbunden ist. Die vorstehend genannte gängige dreiphasige Umrichterschaltung ist in Fig. 1a gezeigt. Gemäss Fig. 1 a ist weiterhin ein dreiphasiger Transformator vorgesehen, wobei die Sekundärwicklungen des Transformators mit den verbundenen Teilumrichterphasen des ersten und zweiten Teilumrichters verbunden sind. In der in Fig. 1a gezeigten Umrichterschaltung ist dabei jeweils ein erster Anschluss einer jeden Sekundärwicklung mit jeweils einer Verbindung zweier Teilumrichterphasen verbunden. Die jeweiligen zweiten Anschlüsse der Sekundärwicklungen sind zu einer gängigen Sternschaltung verschaltet. Die Primärwicklungen sind gemäss Fig. 1a ebenfalls zu einer gängigen Sternschaltung verschaltet. Für den Betrieb der Umrichterschaltung ist in jeder Teilumrichterphase des ersten und zweiten Teilumrichters eine Induktivität vorgesehen, die zur Erzeugung einer im weitesten Sinne sinusförmigen Phasenspannung der zugehörigen Teilumrichterphase des jeweiligen Teilumrichters dient. Darüber hinaus werden die Halbleiterschalter des ersten und zweiten Teilumrichters für den Betrieb der Umrichterschaltung mit Schaltsignalen mit einer vorgegebenen Schaltfrequenz angesteuert, wobei die Schaltsignale des ersten Teilumrichters 180° phasenversetzt zu den Schaltsignalen des zweiten Teilumrichters sind. In Fig. 1b ist ein typischer zeitlicher Verlauf der Ausgangsströme der Umrichterschaltung nach Fig. 1a beispielsweise auf der Primärseite des Transformators gezeigt. Ferner ist in Fig. 1c ein Frequenzspektrum eines solchen Ausgangstromes gemäss Fig. 1b dargestellt. Weiterhin ist in Fig. 1d ein typischer zeitlicher Verlauf der Ausgangsspannungen der Umrichterschaltung nach Fig. 1a beispielsweise auf der Primärseite des Transformators gezeigt. Schliesslich zeigt Fig. 1e ein Frequenzspektrum einer solchen Ausgangspannung gemäss Fig. 1d.

Weitere gängige Umrichterschaltungen sind in der US 6,233,996 B1, in der EP 0 440 988 A1 und in der EP 0 584 660 A2 offenbart.

Problematisch bei einer gängigen Umrichterschaltung gemäss Fig. 1a ist, dass schaltungsbedingt, d.h. dass jeweils ein Anschluss einer jeden Sekundärwicklung mit jeweils einer Verbindung zweier Teilumrichterphasen verbunden ist, ein sehr grosser Amplitudenanteil bezüglich der Schaltfrequenz und deren ungerade Vielfache sowohl in den Ausgangsströmen nach Fig. 1b und Fig. 1c als auch in den Ausgangsspannungen nach Fig. 1d und Fig. 1e. beim Betrieb der Umrichterschaltung gemäss Fig. 1a auftritt. Diese grossen Amplitudenanteile sind beispielsweise bei Anschluss der Umrichterschaltung mittels des Transformators an ein elektrisches Versorgungsnetz in höchsten Masse unerwünscht. Es ist zwar jeweils ein mit dem ersten Anschluss einer jeden Sekundärwicklung verbundener Filterkondensator vorgesehen, welcher zusammen mit der Induktivität einer jeden Phase des ersten und zweiten Teilumrichters einen Resonanzkreis bildet und eine teilweise Reduktion des Amplitudenanteils bezüglich der Schaltfrequenz sowohl in den Ausgangsströmen als auch in den Ausgangsspannungen bewirken mag. Jedoch sind solche Filterkondensatoren und die Induktivitäten, um eine einigermassen vernünftige Reduktion des Amplitudenanteils bezüglich der Schaltfrequenz in den Ausgangsströmen und in den Ausgangsspannungen zu bewirken, bezüglich ihrer Kapazitäts- bzw. Induktivitätswerte gross auszulegen, weisen somit eine grosse Baugrösse und ein grosses Gewicht auf, benötigen dadurch entsprechend viel Platz und sind damit insgesamt sehr teuer. Desweiteren verkompliziert sich der Aufbau der Umrichterschaltung und die allfällige Wartung der Umrichterschaltung durch solche gross ausgelegten Induktivitäten und Filterkondensatoren, wodurch zusätzliche Kosten entstehen.

### Darstellung der Erfindung

Aufgabe der Erfindung ist es deshalb, eine Umrichterschaltung anzugeben, bei welcher nahezu keine Amplitudenanteile bezüglich der Schaltfrequenz der Umrichterschaltung bei deren Betrieb in den Ausgangsströmen der Umrichterschaltung und in den Ausgangsspannungen der Umrichterschaltung auftreten. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst einen ersten und einen zweiten Teilumrichter, wobei jeder Teilumrichter einen Gleichspannungskreis aufweist und jeweils eine Teilumrichterphase des ersten Teilumrichters mit jeweils einer Teilumrichterphase des zweiten Teilumrichters verbunden ist. Weiterhin umfasst die erfindungsgemässe Umrichterschaltung einen Transformator, wobei die Sekundärwicklungen des Transformators mit den verbundenen Teilumrichterphasen des ersten und zweiten Teilumrichters verbunden sind. Weiterhin ist jeweils eine Sekundärwicklung seriell in jede Verbindung einer Teilumrichterphase des ersten Teilumrichters mit einer Teilumrichterphase des zweiten Teilumrichters eingeschaltet. Erfindungsgemäss ist jede Sekundärwicklung durch zwei seriell miteinander verbundene Teilwicklungen gebildet, wobei der Verbindungspunkt der beiden Teilwicklungen einen Mittelpunktanschluss bildet. Zudem sind jeweils zwei seriell miteinander verbundene Filterkondensatoren parallel zu jeder Sekundärwicklung geschaltet. Diese jeweilige Einschaltung einer durch die Teilwicklungen gebildeten Sekundärwicklung bewirkt vorteilhaft eine starke Reduzierung von Amplitudenanteilen bezüglich der Schaltfrequenz der Umrichterschaltung bei deren Betrieb in Ausgangsströmen und in Ausgangsspannungen der Umrichterschaltung, so dass diese Amplitudenanteile im Vergleich zu gängigen Umrichterschaltungen nahezu nicht auftreten. Zudem können Amplitudenanteile bezüglich ungerader Vielfache der Schaltfrequenz durch die jeweilige Einschaltung einer Sekundärwicklung mit Vorteil ebenfalls stark reduziert werden, so dass auch diese Amplitudenteile weitestgehend unterdrückt sind. Ein normalerweise mit der Umrichterschaltung über den Transformator verbundenes elektrisches Versorgungsnetz wird somit vorteilhaft durch Amplitudenanteile bezüglich der Schaltfrequenz und deren ungerade Vielfache nicht nennenswert oder nur äusserst gering belastet. Zudem bildet jeweils eine der Teilwicklungen einer Sekundärwicklung zusammen mit einem der zugehörigen Filterkondensatoren einen Resonanzkreis, der vorteilhaft der weiteren Reduzierung der Amplitudenanteilen bezüglich der Schaltfrequenz und deren ungerade Vielfache in Ausgangsströmen und in Ausgangsspannungen der Umrichterschaltung dient. Insgesamt kann die Verfügbarkeit der Umrichterschaltung dadurch signifikant erhöht werden.

Ferner wird eine Energiespeichereinrichtung mit einer ersten und zweiten Spannungsquelle angegeben, bei der die erfindungsgemässe Umrichterschaltung vorgesehen ist und dabei der Gleichspannungskreis des ersten Teilumrichters mit der ersten Spannungsquelle verbunden ist und der Gleichspannungskreis des zweiten Teilumrichters mit der zweiten Spannungsquelle verbunden ist. Neben den bereits bei der erfindungsgemässen Umrichterschaltung genannten Vorteilen lässt sich die Energiespeichereinrichtung durch die Verwendung der erfindungsgemässen Umrichterschaltung besonders einfach und platzsparend bezüglich ihres Aufbaus realisieren.

Desweiteren wird Antriebssystem mit einem ersten und einem zweiten Antriebsumrichter angegeben, welche mit einer rotierenden elektrischen Maschine verbunden sind und bei dem die erfindungsgemässe Umrichterschaltung vorgesehen ist. Dabei ist der Gleichspannungskreis des ersten Teilumrichters mit dem ersten Antriebsumrichter verbunden und der Gleichspannungskreis des zweiten Teilumrichters mit dem zweiten Antriebsumrichter verbunden. Zusätzlich zu den bereits bei der erfindungsgemässen Umrichterschaltung genannten Vorteilen lässt sich auch ein solches Antriebssystem durch die Verwendung der erfindungsgemässen Umrichterschaltung besonders einfach und platzsparend bezüglich seines Aufbaus realisieren.

Darüber hinaus wird ein Umrichtersystem mit einem ersten und einem zweiten Lastumrichter zur Speisung einer elektrischen Last angegeben, bei dem die erfindungsgemässe Umrichterschaltung vorgesehen ist und dabei der Gleichspannungskreis des ersten Teilumrichters mit dem ersten Lastumrichter verbunden ist und der Gleichspannungskreis des zweiten Teilumrichters mit dem zweiten Lastumrichter verbunden ist. Neben den bereits bei der erfindungsgemässen Umrichterschaltung genannten Vorteilen lässt sich auch ein solches Umrichtersystem durch die Verwendung der erfindungsgemässen Umrichterschaltung besonders einfach und platzsparend bezüglich seines Aufbaus realisieren.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1a: eine gängige Ausführungsform einer Umrichterschaltung,
- Fig. 1b: typischer zeitlicher Verlauf der Ausgangsströme der Umrichterschaltung nach Fig. 1a an der Primärseite des Transformators,
- Fig. 1c: typisches Frequenzspektrum eines Ausgangsstromes nach Fig. 1b,
- Fig. 1d: typischer zeitlicher Verlauf der Ausgangsspannungen der Umrichterschaltung nach Fig. 1a an der Primärseite des Transformators,
- Fig. 1e: typisches Frequenzspektrum einer Ausgangsspannung nach Fig. 1d,
- Fig. 2a: eine erste Ausführungsform einer erfindungsgemässen Umrichterschaltung,
- Fig. 2b: zeitlicher Verlauf der Ausgangsströme der Umrichterschaltung nach Fig. 2a an der Primärseite des Transformators,
- Fig. 2c: Frequenzspektrum eines Ausgangsstromes nach Fig. 2b,
- Fig. 2d: zeitlicher Verlauf der Ausgangsspannungen der Umrichterschaltung nach Fig. 2a an der Primärseite des Transformators,
- Fig. 2e: Frequenzspektrum einer Ausgangsspannung nach Fig. 2d,
- Fig. 3: eine zweite Ausführungsform der erfindungsgemässen Umrichterschaltung,
- Fig. 4: eine dritte Ausführungsform der erfindungsgemässen Umrichterschaltung,
- Fig. 5: eine Ausführungsform einer erfindungsgemässen Energiespeichereinrichtung,
- Fig. 6: eine Ausführungsform eines erfindungsgemässen Antriebssystems und
- Fig. 7: eine Ausführungsform eines erfindungsgemässen Umrichtersystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

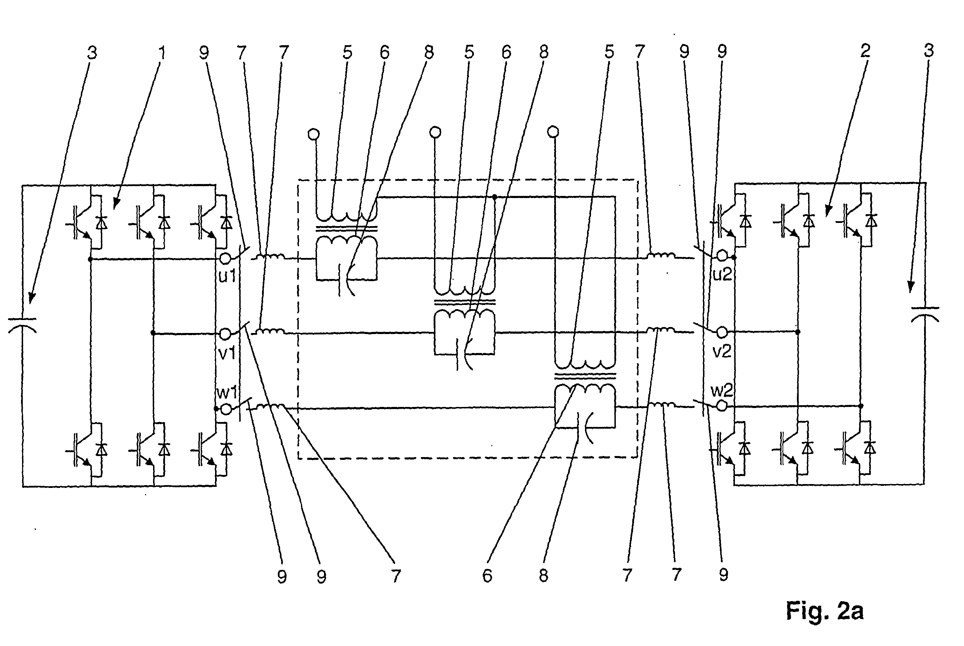

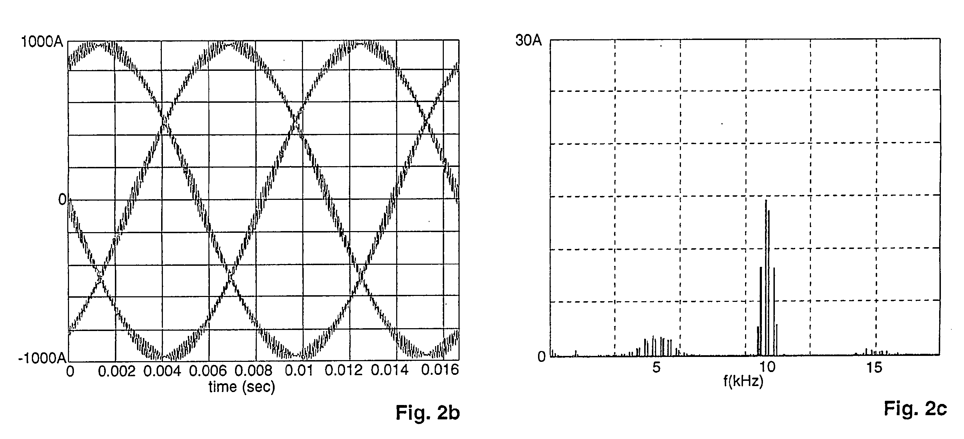

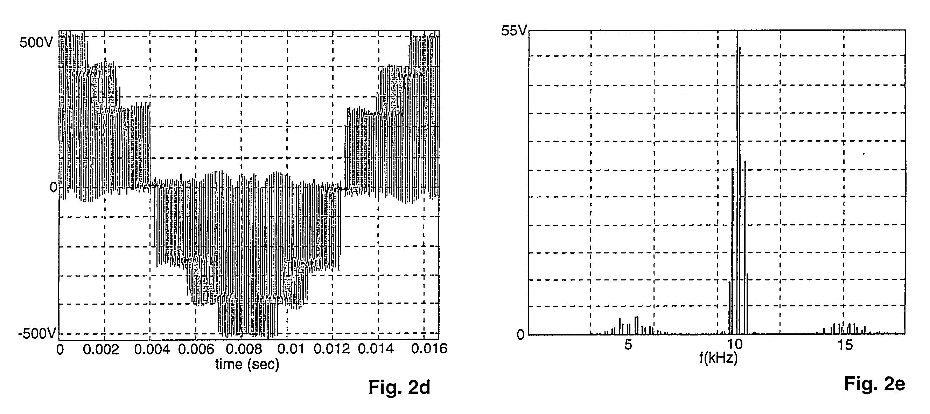

In Fig. 2a ist eine erste Ausführungsform einer erfindungsgemässen Umrichterschaltung dargestellt. Die Umrichterschaltung umfasst einen ersten und einen zweiten Teilumrichter 1, 2, wobei jeder Teilumrichter 1, 2 einen Gleichspannungskreis 3 aufweist. Gemäss Fig. 2a ist jeder Teilumrichters 1, 2 zur Schaltung von zwei Schaltspannungsniveaus, nämlich die positive Gleichspannung und die negative Gleichspannung des zugehörigen Gleichspannungskreises 3, ausgebildet. Jeder Gleichspannungskreis 3 weist dann gemäss Fig. 2a einen Kondensator auf. Es ist aber auch denkbar, dass der jeder Teilumrichter 1, 2 allgemein zur Schaltung von n Schaltspannungsniveaus ausgebildet ist, wobei n≥2 ist und wobei der zugehörige Gleichspannungskreis 3 dann entsprechend ausgeführt ist. Gemäss Fig. 2a ist jeweils eine Teilumrichterphase u1, v1, w1 des ersten Teilumrichters 1 mit jeweils einer Teilumrichterphase u2, v2, w2 des zweiten Teilumrichters 2 verbunden. Desweiteren ist ein Transformator 4 vorgesehen, wobei die Sekundärwicklungen 6 des Transformators 4 mit den verbundenen Teilumrichterphasen u1, v1, w1, u2, v2, w2 des ersten und zweiten Teilumrichters 1,2 verbunden sind. Gemäss Fig. 2a ist jeweils eine Sekundärwicklung 6 seriell in jede Verbindung einer Teilumrichterphase u1, v1, w1 des ersten Teilumrichters 1 mit einer Teilumrichterphase u2, v2, w2 des zweiten Teilumrichters 2 eingeschaltet. Die Halbleiterschalter des ersten und zweiten Teilumrichters 1, 2 werden für den Betrieb der Umrichterschaltung mit Schaltsignalen mit einer vorgegebenen Schaltfrequenz angesteuert, wobei die Schaltsignale des ersten Teilumrichters 1 180° phasenversetzt zu den Schaltsignalen des zweiten Teilumrichters 1 sind und die Schaltfrequenz beispielsweise 5kHz beträgt. In Fig. 2b ist dazu ein zeitlicher Verlauf der Ausgangsströme der erfindungsgemässen Umrichterschaltung nach Fig. 2a an der Primärseite des Transformators 4 gezeigt. Weiterhin ist in Fig. 2c ein Frequenzspektrum eines Ausgangsstromes nach Fig. 2b dargestellt. Ferner ist in Fig. 2d ein zeitlicher Verlauf der Ausgangsspannungen der Umrichterschaltung nach Fig. 2a an der Primärseite des Transformators 4 dargestellt. Schliesslich zeigt Fig. 2e ein Frequenzspektrum einer Ausgangsspannung nach Fig. 2d. Die jeweilige serielle Einschaltung einer Sekundärwicklung 6 in jede Verbindung einer Teilumrichterphase u1, v1, w1 des ersten Teilumrichters 1 mit einer Teilumrichterphase u2, v2, w2 des zweiten Teilumrichters 2 bewirkt gemäss Fig. 2b bis Fig. 2e vorteilhaft eine starke Reduzierung von Amplitudenanteilen bezüglich der Schaltfrequenz der Umrichterschaltung bei deren Betrieb in Ausgangsströmen und in Ausgangsspannungen der Umrichterschaltung. Im Vergleich zu dem eingangs erwähnten typischen zeitlichen Verlauf der Ausgangsströme nach Fig. 1b der Umrichterschaltung nach dem Stand der Technik gemäss Fig. 1a mit dem zugehörigen Frequenzspektrum gemäss Fig. 1c und dem weiterhin eingangs erwähnten typischen zeitlichen Verlauf der Ausgangsspannungen nach Fig. 1d der Umrichterschaltung nach dem Stand der Technik gemäss Fig. 1a mit dem zugehörigen Frequenzspektrum gemäss Fig. 1e wird diese Reduktion von Amplitudenanteilen bezüglich der Schaltfrequenz besonders deutlich sichtbar, d.h. diese Amplitudenanteile treten im Vergleich zu einer gängigen Umrichterschaltung nach Fig. 1a nahezu nicht auf.

Zudem können Amplitudenanteile bezüglich ungerader Vielfache der Schaltfrequenz durch die jeweilige Einschaltung einer Sekundärwicklung 6 mit Vorteil ebenfalls stark reduziert werden, so dass auch diese Amplitudenteile weitestgehend unterdrückt sind. Dies zeigt ebenfalls der Vergleich von Fig. 1b bis Fig. 1e mit Fig. 2b bis Fig. 2e sehr deutlich. Ein normalerweise mit der Umrichterschaltung über den Transformator 4 verbundenes elektrisches Versorgungsnetz wird somit vorteilhaft durch Amplitudenanteile bezüglich der Schaltfrequenz und deren ungerade Vielfache nicht nennenswert oder nur äusserst gering belastet.

Vorzugsweise ist bei einem der Teilumrichter 1,2 zwischen jeder Teilumrichterphase u1, v1, w1, u2, v2, w2 und der Sekundärwicklung 6 eine Induktivität 7 seriell eingeschaltet. Gemäss Fig. 2a kann es aus Symmetriegründen aber auch vorteilhaft sein, dass bei beiden Teilumrichtern 1, 2 zwischen jeder Teilumrichterphase u1, v1, w1, u2, v2, w2 und der Sekundärwicklung 6 eine Induktivität 7 seriell eingeschaltet ist. Die jeweilige Induktivität 7 dient vorteilhaft der Erzeugung einer im weitesten Sinne sinusförmigen Phasenspannung der zugehörigen Teilumrichterphase u1, v1, w1, u2, v2, w2 des jeweiligen Teilumrichters 1, 2.

In Fig. 2a ist ferner an jeder Teilumrichterphase u1, v1, w1, u2, v2, w2 ein Phasentrennschalter 9 vorgesehen, der vorteilhaft zur Abtrennung des zughörigen Teilumrichters 1, 2, beispielsweise im Fehlerfall des zugehörigen Teilumrichters 1, 2 oder zu dessen Wartungszwecken dient. Weiterhin ist bei der ersten Ausführungsform der erfindungsgemässen Umrichterschaltung nach Fig. 2a ein Filterkondensator 8 parallel zu jeder Sekundärwicklung 6 geschaltet. Der jeweilige Filterkondensator 8 zusammen mit der jeweiligen Sekundärwicklung 6 und insbesondere mit der Induktivität 7 bildet einen Resonanzkreis, der vorzugsweise eine Tiefpasscharakteristik aufweist, wobei der Filterkondensator 8 bezüglich seines Kapazitätswertes vorzugsweise derart ausgelegt ist, dass der Resonanzkreis eine Eckfrequenz von im wesentlichen 2/3 der Schaltfrequenz aufweist. Bei der bereits vorstehend beispielhaft erwähnten Schaltfrequenz von 5kHz ergäbe dies eine Eckfrequenz des Resonanzkreises im Bereich von 3kHz. Der derart realisierte Resonanzkreis dient vorteilhaft der weiteren Reduzierung der Amplitudenanteile bezüglich der Schaltfrequenz und deren ungerade Vielfache in Ausgangsströmen und in Ausgangsspannungen der Umrichterschaltung. Durch die hohe Eckfrequenz, welche näher an der Schaltfrequenz als bei dem eingangs bereits erwähnten bekannten Resonanzkreisen liegt, kann der jeweilige Filterkondensator 8 und insbesondere die jeweilige Induktivität 7 bezüglich ihrer Kapazitäts- bzw. Induktivitätswerte zudem klein im Vergleich zu dem eingangs erwähnten Resonanzkreis ausgelegt werden. Somit reduziert sich durch diese kleine Auslegung vorteilhaft auch die Baugrösse und das Gewicht des jeweiligen Filterkondensators 8 und insbesondere der jeweiligen Induktivität 7 und es wird vorteilhaft entsprechend weniger Platz benötigt. Desweiteren vereinfacht sich der Aufbau der Umrichterschaltung und die allfällige Wartung der Umrichterschaltung durch solche klein ausgelegten Induktivitäten 7 und Filterkondensatoren 8, wodurch weiter Kosten eingespart werden können.

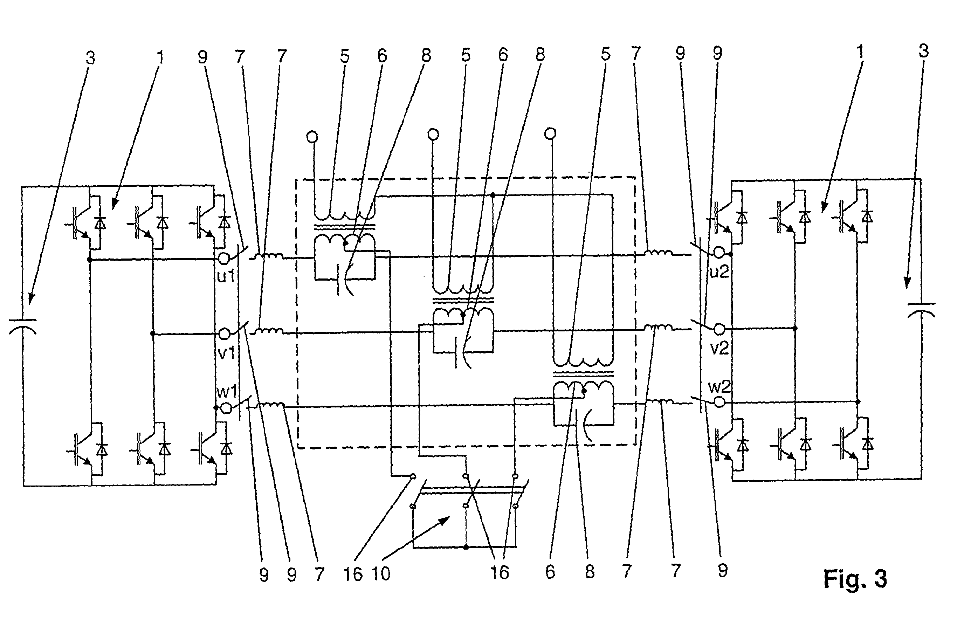

In Fig. 3 ist eine zweite Ausführungsform der erfindungsgemässen Umrichterschaltung dargestellt. Darin ist im Unterschied zu der Ausführungsform der erfindungsgemässen Umrichterschaltung nach Fig. 2a jede Sekundärwicklung 6 durch zwei seriell miteinander verbundene Teilwicklungen gebildet, wobei der Verbindungspunkt der beiden Teilwicklungen einen Mittelpunktanschluss 16 bildet. Weiterhin ist in Fig. 3 ein Verbindungsschalter 10 zur Verbindung der Mittelpunktanschlüsse 16 miteinander vorgesehen. Tritt nun beispielsweise ein Fehler im ersten Teilumrichter 1 auf oder muss dieser gewartet werden, so wird jeder Phasentrennschalter 9 der jeweiligen Teilumrichterphase u1, v1, w1 des ersten Teilumrichters 1 geöffnet, um den ersten Teilumrichter 1 abzutrennen. Weiterhin wird der Verbindungsschalter 10 geschlossen, so dass die Umrichterschaltung vorteilhaft mit dem zweiten Teilumrichter 2 auch bei abgetrenntem ersten Teilumrichter 1 weiterbetrieben werden kann. Die Verfügbarkeit der Umrichterschaltung insgesamt kann dadurch stark erhöht werden.

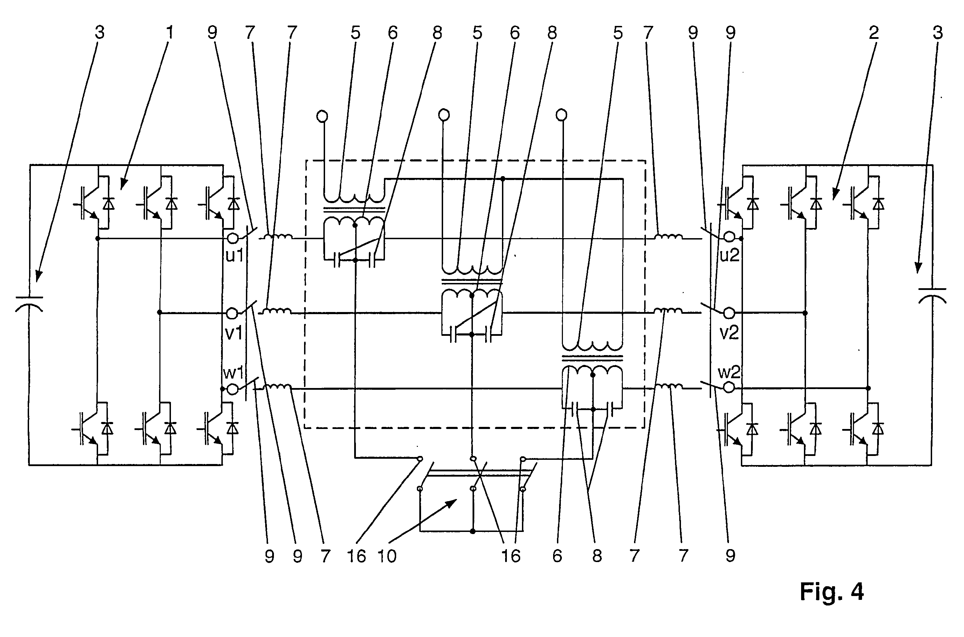

In Fig. 4 ist eine dritte Ausführungsform der erfindungsgemässen Umrichterschaltung gezeigt. Darin sind im Unterschied zu der Ausführungsform der erfindungsgemässen Umrichterschaltung nach Fig. 3 jeweils zwei seriell miteinander verbundene Filterkondensatoren 8 parallel zu jeder Sekundärwicklung 6 geschaltet, wobei der Verbindungspunkt der beiden Teilwicklungen vorzugsweise mit dem Verbindungspunkt der beiden Filterkondensatoren 8 verbunden ist, d.h. dass der Verbindungspunkt der beiden Filterkondensatoren 8 mit dem Mittelpunktanschluss 16 verbunden ist. Vorteilhaft bildet jeweils eine der Teilwicklungen einer Sekundärwicklung 6 zusammen mit einem der zugehörigen Filterkondensatoren 8 und insbesondere mit der Induktivität 7 einen Resonanzkreis, der vorteilhaft der weiteren Reduzierung der Amplitudenanteilen bezüglich der Schaltfrequenz und deren ungerade Vielfache in Ausgangsströmen und in Ausgangsspannungen der Umrichterschaltung dient. Durch die hohe Eckfrequenz dieses Resonanzkreises kann der jeweilige Filterkondensator 8 und insbesondere die jeweilige Induktivität 7 klein im Vergleich zu dem eingangs erwähnten Resonanzkreis ausgelegt werden. Damit reduziert sich durch diese kleine Auslegung vorteilhaft auch die Baugrösse und das Gewicht des jeweiligen Filterkondensators 8 und der jeweiligen Induktivität 7 und es wird vorteilhaft entsprechend weniger Platz benötigt. Ferner vereinfacht sich der Aufbau der Umrichterschaltung und die allfällige Wartung der Umrichterschaltung durch solche klein ausgelegten Induktivitäten 7 und Filterkondensatoren 8, wodurch weiter Kosten eingespart werden können.

Ferner ist auch in der Ausführungsform gemäss Fig. 4 ein Verbindungsschalter 10 zur Verbindung der Mittelpunktanschlüsse 16 miteinander vorgesehen. Wie bei der Ausführungsform gemäss Fig. 3 kann bezüglich der Ausführungsform nach Fig. 4 im Fehlerfall oder zu Wartungszwecken beispielsweise am ersten Teilumrichter 1 dieser durch Öffnen eines jeden Phasentrennschalter 9 der jeweiligen Teilumrichterphase u1, v1, w1 des ersten Teilumrichters 1 abgetrennt werden und die Umrichterschaltung durch Schliessen des Verbindungsschalters 10 mit dem zweiten Teilumrichter 2 weiterbetrieben werden. Dabei dient dann eine der Teilwicklungen der Sekundärwicklung 6 der bereits bei der Ausführungsform der erfindungsgemässen Umrichterschaltung nach Fig. 2a detailliert erläuterten starken Reduzierung von Amplitudenanteilen bezüglich der Schaltfrequenz der Umrichterschaltung bei deren Betrieb in Ausgangsströmen und in Ausgangsspannungen. Bezüglich der Ausführungsform nach Fig. 4 bildet bei dem vorstehend bezüglich Fig. 3 bereits genannten Weiterbetrieb der Umrichterschaltung mit beispielsweise dem zweiten Teilumrichter 2 jeweils eine der Teilwicklungen einer Sekundärwicklung 6 und insbesondere die Induktivität 7 der zughörigen Teilumrichterphase u2, v2, w2 des zweiten Teilumrichters 2 zusammen mit einem der zugehörigen Filterkondensatoren 8 einen Resonanzkreis, der vorteilhaft der weiteren Reduzierung der Amplitudenanteilen bezüglich der Schaltfrequenz und deren ungerade Vielfache in Ausgangsströmen und in Ausgangsspannungen der Umrichterschaltung dient. Auch bei dieser Ausführungsform gemäss Fig. 4 kann die Verfügbarkeit der Umrichterschaltung damit insgesamt stark erhöht werden.

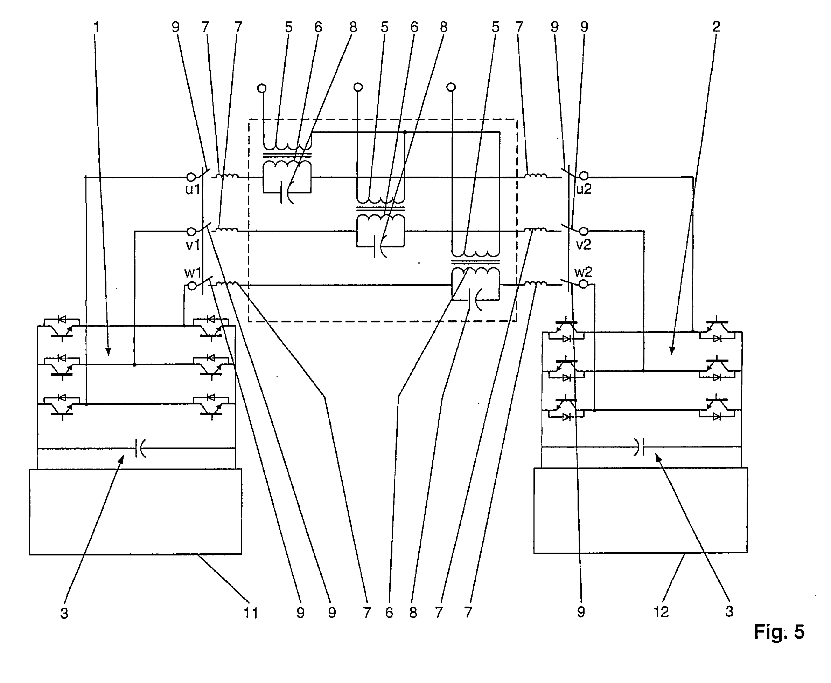

Es hat sich als besonders vorteilhaft erwiesen, die vorstehend an Hand der Ausführungsformen gemäss Fig. 2a, Fig. 3 und Fig. 4 detailliert beschriebenen erfindungsgemässe Umrichterschaltung in einem Energiespeichereinrichtung mit einer ersten und einer zweiten Spannungsquelle 11, 12 einzusetzen. In Fig. 5 ist eine Ausführungsform einer solchen erfindungsgemässen Energiespeichereinrichtung dargestellt, darin ist der Gleichspannungskreis 3 des ersten Teilumrichters 1 mit der ersten Spannungsquelle 11 verbunden und der Gleichspannungskreis 3 des zweiten Teilumrichters 2 mit der zweiten Spannungsquelle 12 verbunden. Zu den bereits bei der erfindungsgemässen Umrichterschaltung genannten Vorteilen kommt hinzu, dass sich die erfindungsgemässe Energiespeichereinrichtung durch die Verwendung der erfindungsgemässen Umrichterschaltung besonders einfach und platzsparend bezüglich ihres Aufbaus realisieren lässt.

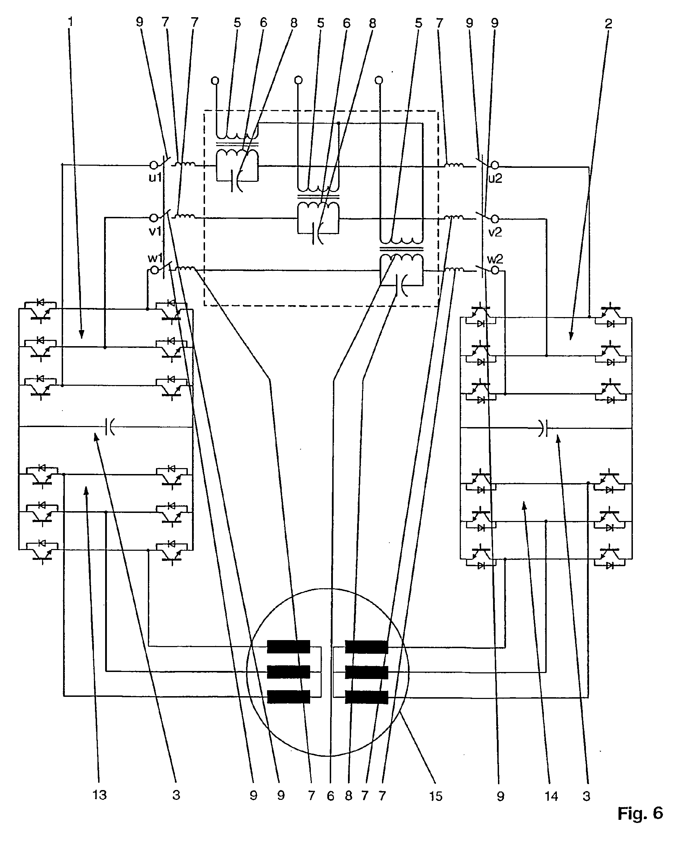

Ferner hat es sich als vorteilhaft erwiesen, die vorstehend an Hand der Ausführungsformen gemäss Fig. 2a, Fig. 3 und Fig. 4 detailliert beschriebenen erfindungsgemässe Umrichterschaltung in einem Antriebssystem mit einem ersten und einem zweiten Antriebsumrichter 13, 14 einzusetzen. In Fig. 6 ist eine Ausführungsform eines solchen erfindungsgemässen Antriebssystems gezeigt. Darin ist der erste und zweite Antriebsumrichter 13, 14 mit einer rotierenden elektrischen Maschine 15 verbunden in der in Fig. 5 gezeigten Weise verbunden. Zudem ist der Gleichspannungskreis 3 des ersten Teilumrichters 1 mit dem ersten Antriebsumrichter 13 verbunden und der Gleichspannungskreis 3 des zweiten Teilumrichters 2 mit dem zweiten Antriebsumrichter 14 verbunden. Neben den bereits bei der erfindungsgemässen Umrichterschaltung genannten Vorteilen lässt sich auch ein solches Antriebssystem durch die Verwendung der erfindungsgemässen Umrichterschaltung besonders einfach und platzsparend bezüglich seines Aufbaus realisieren.

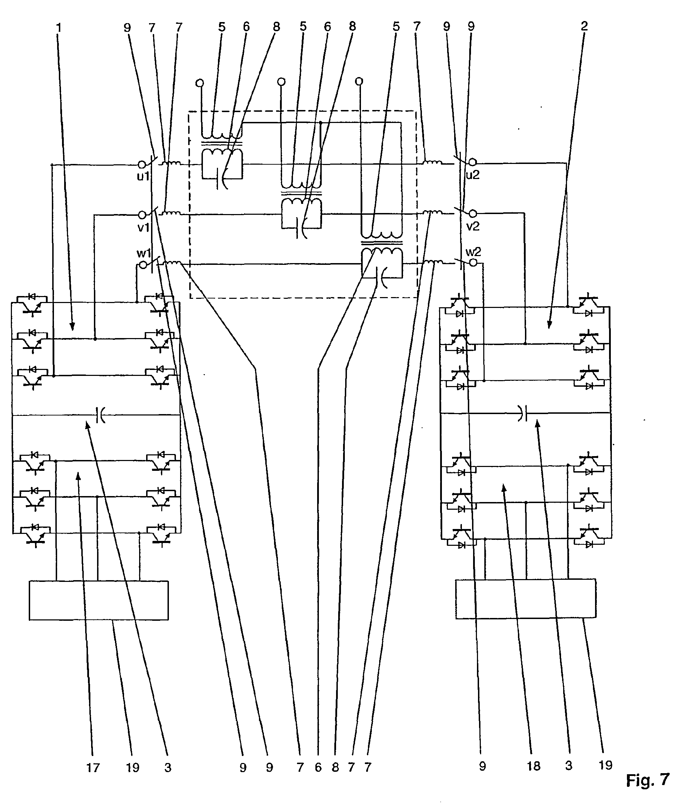

Darüber hinaus hat es sich als vorteilhaft erwiesen, die vorstehend an Hand der Ausführungsformen gemäss Fig. 2a, Fig. 3 und Fig. 4 detailliert beschriebenen erfindungsgemässe Umrichterschaltung in einem Umrichtersystem mit einem ersten und einem zweiten Lastumrichter 17, 18 zur Speisung einer elektrischen Last 19 einzusetzen. In Fig. 7 ist eine Ausführungsform eines solchen erfindungsgemässen allgemeinen Umrichtersystems dargestellt. Darin ist der Gleichspannungskreis 3 des ersten Teilumrichters 1 mit dem ersten Lastumrichter 17 verbunden und der Gleichspannungskreis 3 des zweiten Teilumrichters 2 mit dem zweiten Lastumrichter 18 verbunden. Gemäss Fig. 7 ist eine elektrische Last 19 mit dem ersten Lastumrichter 17 und eine weiter elektrische Last 19 mit dem zweiten Lastumrichter 18 verbunden. Es ist aber auch denkbar, dass der erste Lastumrichter 17 und der zweite Lastumrichter 18 mit einer einzigen gemeinsamen elektrischen Last 19 verbunden ist. Alternativ dazu ist es ebenfalls denkbar, dass jeder Lastumrichter 17, 18 jeweils mit einer Vielzahl an elektrischen Lasten 19 verbunden ist, wobei dann der erste und der zweite Lastumrichter 17, 18 insbesondere über einen Teil der elektrischen Lasten 19 miteinander verbunden sind. Zusätzlich zu den bereits bei der erfindungsgemässen Umrichterschaltung genannten Vorteilen lässt sich auch ein solches Umrichtersystem durch die Verwendung der erfindungsgemässen Umrichterschaltung besonders einfach und platzsparend bezüglich seines Aufbaus realisieren.

### Bezugszeichenliste

- 1: erster Teilumrichter
- 2: zweiter Teilumrichter
- 3: Gleichspannungskreis
- 4: Transformator
- 5: Primärwicklung
- 6: Sekundärwicklung
- 7: Induktivität
- 8: Filterkondensator
- 9: Phasentrennschalter
- 10: Verbindungsschalter
- 11: erste Spannungsquelle
- 12: zweite Spannungsquelle
- 13: erster Antriebsumrichter
- 14: zweiter Antriebsumrichter
- 15: rotierende elektrische Maschine
- 16: Mittelpunktanschluss
- 17: erste Lastumrichter
- 18: zweiter Lastumrichter
- 19: elektrische Last

## Patentansprüche

1. Umrichterschaltung mit einem ersten und einem zweiten Teilumrichter (1, 2), wobei jeder Teilumrichter(1, 2) einen Gleichspannungskreis (3) aufweist und jeweils eine Teilumrichterphase (u1, v1, w1) des ersten Teilumrichters (1) mit jeweils einer Teilumrichterphase (u2, v2, w2) des zweiten Teilumrichters (2) verbunden ist, und
mit einem Transformator (4), wobei die Sekundärwicklungen (6) des Transformators (4) mit den verbundenen Teilumrichterphasen (u1, v1, w1, u2, v2, w2) des ersten und zweiten Teilumrichters (1,2) verbunden sind und jeweils eine Sekundärwicklung (6) seriell in jede Verbindung einer Teilumrichterphase (u1, v1, w1) des ersten Teilumrichters (1) mit einer Teilumrichterphase (u2, v2, w2) des zweiten Teilumrichters (2) eingeschaltet ist,
**dadurch gekennzeichnet, dass**
jede Sekundärwicklung (6) durch zwei seriell miteinander verbundene Teilwicklungen gebildet ist, wobei der Verbindungspunkt der beiden Teilwicklungen einen Mittelpunktanschluss (16) bildet, und
jeweils zwei seriell miteinander verbundene Filterkondensatoren (8) parallel zu jeder Sekundärwicklung (6) geschaltet sind.

2. Umrichterschaltung nach Anspruch 1, **dadurch gekennzeichnet, dass** bei einem der Teilumrichter (1, 2) zwischen jeder Teilumrichterphase (u1, v1, w1, u2, v2, w2) und der Sekundärwicklung (6) eine Induktivität (7) seriell eingeschaltet ist.

3. Umrichterschaltung nach Anspruch 1, **dadurch gekennzeichnet, dass** bei beiden Teilumrichtern (1, 2) zwischen jeder Teilumrichterphase (u1, v1, w1, u2, v2, w2) und der Sekundärwicklung (6) eine Induktivität (7) seriell eingeschaltet ist.

4. Umrichterschaltung nach einem der vorhergehenden Ansprüche, **dadurch gekennzeichnet, dass** an jeder Teilumrichterphase (u1, v1, w1, u2, v2, w2) ein Phasentrennschalter (9) vorgesehen ist.

5. Umrichterschaltung nach einem der vorhergehenden Ansprüche, **dadurch gekennzeichnet, dass** der Verbindungspunkt der beiden Filterkondensatoren (8) mit dem Mittelpunktanschluss (16) verbunden ist.

6. Umrichterschaltung nach einem der vorhergehenden Ansprüche, **dadurch gekennzeichnet, dass** ein Verbindungsschalter (10) zur Verbindung der Mittelpunktanschlüsse (16) miteinander vorgesehen ist.

7. Energiespeichereinrichtung mit einer ersten und einer zweiten Spannungsquelle (11, 12),
**dadurch gekennzeichnet, dass** eine Umrichterschaltung nach einem der Ansprüche 1 bis 6 vorgesehen ist und der Gleichspannungskreis (3) des ersten Teilumrichters (1) mit der ersten Spannungsquelle (11) verbunden ist und der Gleichspannungskreis (3) des zweiten Teilumrichters (2) mit der zweiten Spannungsquelle (12) verbunden ist.

8. Antriebssystem mit einem ersten und einem zweiten Antriebsumrichter (13, 14), welche mit einer rotierenden elektrischen Maschine (15) verbunden sind,
**dadurch gekennzeichnet, dass** eine Umrichterschaltung nach einem der Ansprüche 1 bis 6 vorgesehen ist und der Gleichspannungskreis (3) des ersten Teilumrichters (1) mit dem ersten Antriebsumrichter (13) verbunden ist und der Gleichspannungskreis (3) des zweiten Teilumrichters (2) mit dem zweiten Antriebsumrichter (14) verbunden ist.

9. Umrichtersystem mit einem ersten und einem zweiten Lastumrichter (17, 18) zur Speisung einer elektrischen Last (19),
**dadurch gekennzeichnet, dass** eine Umrichterschaltung nach einem der Ansprüche 1 bis 6 vorgesehen ist und der Gleichspannungskreis (3) des ersten Teilumrichters (1) mit dem ersten Lastumrichter (17) verbunden ist und der Gleichspannungskreis (3) des zweiten Teilumrichters (2) mit dem zweiten Lastumrichter (18) verbunden ist.

## Claims

1. Converter circuit having a first and a second converter element (1, 2), with each converter element (1, 2) having a DC voltage circuit (3) and in each case one converter element phase (u1, v1, w1) of the first converter element (1) being connected to a respective converter element phase (u2, v2, w2) of the second converter element (2), and having a transformer (4), with the secondary windings (6) of the transformer (4) being connected to the connected converter element phases (u1, v1, w1, u2, v2, w2) of the first and second converter elements (1, 2), and one secondary winding (6) in each case being connected in series in each connection of one converter element phase (u1, v1, w1) of the first converter element (1) to one converter element phase (u2, v2, w2) of the second converter element (2), **characterized in that** each secondary winding (6) is formed by two winding elements which are connected to one another in series, with the junction point of the two winding elements forming a neutral-point connection (16), and two filter capacitors (8) which are connected to one another in series are each connected in parallel with each secondary winding (6).

2. Converter circuit according to Claim 1, **characterized in that** an inductance (7) is connected in series between each converter element phase (u1, v1, w1, u2, v2, w2) and the secondary winding (6) for one of the converter elements (1, 2).

3. Converter circuit according to Claim 1, **characterized in that** an inductance (7) is connected in series between each converter element phase (u1, v1, w1, u2, v2, w2) and the secondary winding (6) for both converter elements (1, 2).

4. Converter circuit according to one of the preceding claims, **characterized in that** a phase isolating switch (9) is provided on each converter element phase (u1, v1, w1, u2, v2, w2).

5. Converter circuit according to one of the preceding claims, **characterized in that** the junction point of the two filter capacitors (8) is connected to the neutral-point connection (16).

6. Converter circuit according to one of the preceding claims, **characterized in that** a connecting switch (10) is provided for connecting the neutral-point connections (16) to one another.

7. Energy storage device having a first and a second voltage source (11, 12), **characterized in that** a converter circuit according to one of Claims 1 to 6 is provided, and the DC voltage circuit (3) of the first converter element (1) is connected to the first voltage source (11), and the DC voltage circuit (3) of the second converter element (2) is connected to the second voltage source (12).

8. Drive system having a first and a second drive converter (13, 14), which are connected to a rotating electrical machine (15), **characterized in that** a converter circuit according to one of Claims 1 to 6 is provided, and the DC voltage circuit (3) of the first converter element (1) is connected to the first drive converter (13), and the DC voltage circuit (3) of the second converter element (2) is connected to the second drive converter (14).

9. Converter system having a first and a second load converter (17, 18) for feeding an electrical load (19), **characterized in that** a converter circuit according to one of Claims 1 to 6 is provided, and the DC voltage circuit (3) of the first converter element (1) is connected to the first load converter (17), and the DC voltage circuit (3) of the second converter element (2) is connected to the second load converter (18).

## Revendications

1. Circuit convertisseur comprenant un premier et un second convertisseur partiel (1, 2), chaque convertisseur partiel (1, 2) présentant un circuit de tension continue (3) et à chaque fois une phase de convertisseur partiel (u1, v1, w1) du premier convertisseur partiel (1) étant relié à respectivement une phase de convertisseur partiel (u2, v2, w2), du second convertisseur partiel (2), et
un transformateur (4), les enroulements secondaires (6) du transformateur (4) étant reliés aux phases de convertisseur partiel (u1, v1, w1, u2, v2, w2) reliées du premier et du second convertisseur partiel (1, 2) et à chaque fois un enroulement secondaire (6) étant intégré en série dans chaque liaison d'une phase de convertisseur partiel (u1, v1, w1) du premier convertisseur partiel (1) avec une phase de convertisseur partiel (u2, v2, w2) du second convertisseur partiel (2),
**caractérisé en ce que**
chaque enroulement secondaire (6) est formé par deux enroulements partiels reliés en série l'un à l'autre, le point de liaison des deux enroulements partiels formant un branchement central (16), et
à chaque fois deux condensateurs de filtrage (8) reliés en série l'un à l'autre étant branchés parallèlement à chaque enroulement secondaire (6).

2. Circuit convertisseur selon la revendication 1, **caractérisé en ce que**, sur l'un des convertisseurs partiels (1, 2), une inductance (7) est intercalée en série entre chaque phase de convertisseur partiel (u1, v1, w1, u2, v2, w2) et l'enroulement secondaire (6).

3. Circuit convertisseur selon la revendication 1, **caractérisé en ce que**, sur les deux convertisseurs partiels (1, 2), une inductance (7) est intégrée en série entre chaque phase de convertisseur partiel (u1, v1, w1, u2, v2, w2) et l'enroulement secondaire (6).

4. Circuit convertisseur selon l'une quelconque des revendications précédentes, **caractérisé en ce qu'**un interrupteur de phase (9) est prévu sur chaque phase de convertisseur partiel (u1, v1, w1, u2, v2, w2).

5. Circuit convertisseur selon l'une quelconque des revendications précédentes, **caractérisé en ce que** le point de liaison des deux condensateurs de filtrage (8) est relié au branchement central (16).

6. Circuit convertisseur selon l'une quelconque des revendications précédentes, **caractérisé en ce qu'**un interrupteur de liaison (10) est prévu pour la liaison des branchements centraux (16) les uns aux autres.

7. Dispositif d'accumulateur d'énergie comprenant une première et une seconde sources de tension (11, 12),
**caractérisé en ce qu'**un circuit convertisseur est prévu selon l'une quelconque des revendications 1 à 6 et le circuit de tension continue (3) du premier convertisseur partiel (1) est relié à la première source de tension (11) et le circuit de tension continue (3) du second convertisseur partiel (2) est relié à la seconde source de tension (12).

8. Système d'entraînement comprenant un premier et un second convertisseurs d'entraînement (13, 14), lesquels sont reliés à une machine électrique (15) rotative,
**caractérisé en ce qu'**un circuit convertisseur est prévu selon l'une quelconque des revendications 1 à 6 et le circuit de tension continue (3) du premier convertisseur (1) est relié au premier convertisseur d'entraînement (13) et le circuit de tension continue (3) du second convertisseur partiel (2) est relié au second convertisseur d'entraînement (14).

9. Système de convertisseur comprenant un premier et un second convertisseurs de charge (17, 18) pour l'alimentation d'une charge (19) électrique,
**caractérisé en ce qu'**un circuit convertisseur est prévu selon l'une quelconque des revendications 1 à 6 et le circuit de tension continue (3) du premier convertisseur partiel (1) est relié au premier convertisseur de charge (17) et le circuit de tension continue (3) du second convertisseur partiel (2) est relié au second convertisseur de charge (18).
